# FASCICULE DE BREVET EUROPEEN

(11) **EP 4 168 255 B1**
(45) Date de publication et mention de la délivrance du brevet: **04.03.2026**
(21) Numéro de dépôt: 21737721.7
(22) Date de dépôt: 15.06.2021
(51) Int. Cl.: B60C 1/00, C08K 3/04, C08K 5/13, C08K 5/14, C08K 5/1535, C08K 5/1545

(54) **COMPOSITION ÉLASTOMÉRIQUE COMPRENANT UN COMPOSÉ PHÉNOLIQUE ET UN COMPOSÉ DE LA FAMILLE DES OSES**
ELASTOMERE ZUSAMMENSETZUNG MIT EINER PHENOLVERBINDUNG UND EINER VERBINDUNG AUS DER MONOSACCHARIDFAMILIE
ELASTOMERIC COMPOSITION COMPRISING A PHENOLIC COMPOUND AND A COMPOUND FROM THE MONOSACCHARIDE FAMILY

(30) Priorité: 18.06.2020 FR 2006362
(43) Date de publication de la demande: 26.04.2023
(73) Titulaire: COMPAGNIE GENERALE DES ETABLISSEMENTS MICHELIN, 63000 Clermont-Ferrand (FR)
(72) Inventeur: ARAUJO DA SILVA, José-Carlos, 63040 CLERMONT-FERRAND (FR); DUMONTET, Ludivine, 63040 CLERMONT-FERRAND (FR); PIBRE, Guillaume, 63040 CLERMONT-FERRAND (FR)
(74) Mandataire: M.F.P. Michelin
(86) Numéro de dépôt international: PCT/FR2021/051064
(87) Numéro de publication internationale: WO 2021/255376

(56) Documents cités:
- WO-A1-2020/058613
- WO-A1-2020/058614

## Description

### Domaine technique de l'invention

La présente invention est relative aux compositions de caoutchouc à base d'élastomères, aux composites comprenant de telles compositions, aux articles finis ou semi-finis comprenant de telles compositions ou de tels composites, ainsi qu'aux bandages pneumatiques comprenant de telles compositions ou de tels composites.

### Art antérieur

Les nappes de renforcement des bandages pneumatiques comprennent habituellement un mélange caoutchoutique et des câbles de renforcement, souvent métalliques et recouverts en surface de laiton. Ces nappes étant soumises à des contraintes importantes lors du roulage des bandages pneumatiques, on comprend que l'adhésion entre le mélange caoutchoutique et les éléments de renforcement est une propriété clé.

La fonction d'adhésion impose généralement des formulations spécifiques au mélange caoutchoutique, notamment la nécessité d'un taux de soufre et d'oxyde de zinc élevé, une faible quantité d'acide stéarique, la présence de sel de cobalt et l'emploi d'accélérateur à phase retard longue. Or, ces systèmes de vulcanisation à fort taux de soufre constituent une forte contrainte lors de la fabrication de semi-finis, en particulier pour éviter des réticulations prématurées.

Il est donc intéressant pour les manufacturiers de bandages pneumatiques de formuler des compositions de caoutchouc permettant de s'affranchir de la présence du soufre dans celles-ci tout en permettant une bonne adhésion sur les câbles de renforcement.

Les documents WO 2017/081387 et WO 2017/081388 présentent une composition de caoutchouc et un composite à base d'une matrice polymère comportant un polymère diénique fonctionnel. Ce polymère diénique fonctionnel porte au moins un groupe aromatique substitué par au moins deux fonctions hydroxy vicinales. La réticulation de la composition de caoutchouc est réalisée par un système de vulcanisation ou à base d'un ou plusieurs composés peroxydes. De bonnes propriétés d'adhésion de la composition de caoutchouc au métal sont obtenues, mais nécessitent l'utilisation d'un polymère greffé. Il serait donc intéressant de disposer d'une solution plus simple permettant d'améliorer les propriétés d'adhésion.

La demande JP 2011252107 décrit une composition de caoutchouc ayant une bonne adhésion au métal, cette composition comprenant un élastomère diénique et du sel de cobalt. De l'acide gallique ou un hydrate d'acide gallique facilite la dissociation du sel de cobalt. La composition est réticulée avec un système à base de soufre. Bien que présentant de bonnes caractéristiques d'adhésion, cette composition met en œuvre à la fois du soufre et un sel de cobalt.

La demande WO 2019/122586 enseigne une composition de caoutchouc comprenant un composé phénolique spécifique et dont le système de réticulation ne comprend pas de soufre présentant d'excellentes propriétés d'adhésion à un renfort métallique.

Les documents WO2020/058613 et WO2020/058614 décrivent des compositions de caoutchouc comprenant un composé polyphénolique de haute masse molaire et présentant d'excellentes propriétés d'adhésion à un renfort métallique. Cependant, ce type de composé peut présenter un coût important et une disponibilité faible au regard d'un usage en bandage pneumatique.

Poursuivant ses recherches, la demanderesse a découvert une composition de caoutchouc permettant de résoudre les problèmes évoqués et présentant de très bonnes performances d'adhésion à un support métallique.

### Description détaillée de l'invention

L'invention concerne au moins une des réalisations présentées aux points suivants :
1. Une composition de caoutchouc à base d'au moins un élastomère diénique, une charge renforçante, un système de réticulation à base d'au moins un ou plusieurs amorceurs de polymérisation radicalaire, au moins un composé phénolique de masse molaire au plus égale à 1000 g/mol comprenant un groupe phénolique substitué par au moins un groupe hydrocarboné, ledit groupe hydrocarboné étant interrompu et/ou substitué par un atome d'oxygène et éventuellement par un ou plusieurs hétéroatomes, ladite composition de caoutchouc comprenant en outre au moins un composé de la famille des oses choisi parmi les aldoses et les cétoses.
2. Une composition de caoutchouc selon la réalisation précédente dans laquelle le groupe phénolique du composé phénolique est substitué par au moins deux groupes hydrocarbonés éventuellement interrompus par un ou plusieurs hétéroatomes et/ou substitués, au moins l'un des groupes hydrocarboné étant interrompu et/ou substitué par un atome d'oxygène, les deux groupes hydrocarbonés pouvant former ensemble avec les atomes de carbone du cycle aromatique du groupe phénolique auxquels ils se rattachent, un cycle éventuellement interrompu par un ou plusieurs hétéroatomes et/ou substitué.
3. Une composition de caoutchouc selon l'une quelconque des réalisations précédentes dans laquelle le composé phénolique répond à la formule générale (I) 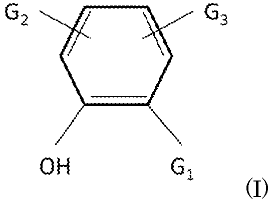 dans laquelle :
   - G1 représente un groupe hydroxyle, carboxyle, alcoxyle ou l'atome d'hydrogène ;
   - G2 représente un groupe hydroxyle, carboxyle, carbonyle ou l'atome d'hydrogène ;
   - G3 représente un groupe hydroxyle, carboxyle, hydrogénocarbonyle, carboxylalkyle, carboxylalkylène, alcoxyle, amino, aminoalkyle, amide, vinyle ou l'atome d'hydrogène ;
   au moins un des substituant G1 à G3 comprenant un atome d'oxygène, la masse molaire dudit composé phénolique étant au plus égale à 1000 g/mol, et au moins un composé de la famille des oses choisi parmi les aldoses et les cétoses.
4. Une composition de caoutchouc selon l'une quelconque des réalisations précédentes dans laquelle ledit composé phénolique est substitué par au moins deux groupes hydroxyles.
5. Une composition de caoutchouc selon l'une quelconque des réalisations précédentes dans laquelle ledit composé phénolique est substitué par au moins un groupe carboxyle.
6. Une composition de caoutchouc selon l'une quelconque des réalisations précédentes dans laquelle ledit composé phénolique est substitué au moins en position para d'un groupe hydroxyle.
7. Une composition de caoutchouc selon la réalisation 6 dans laquelle ledit composé phénolique est substitué en position para d'un groupe hydroxyle par un groupe carboxyle.
8. Une composition de caoutchouc selon l'une quelconque des réalisations 3 à 7 dans laquelle G1, G2 et G3 sont choisis indépendamment parmi les groupes hydroxyle, carboxyle et l'atome d'hydrogène, préférentiellement choisis indépendamment parmi les groupes hydroxyle et carboxyle.
9. Une composition selon l'une quelconque des réalisations précédentes dans laquelle la masse molaire dudit composé phénolique est inférieure à 800 g/mol, préférentiellement inférieure à 600 g/mol, de manière très préférée inférieure à 400 g/mol, très préférentiellement inférieure à 220 g/mol.
10. Une composition de caoutchouc selon la réalisation 1 dans laquelle ledit composé phénolique est choisi parmi l'acide 1,4-dihydroxy-2-naphtoique, la curcumine, le resveratrol, la daidzéine, la génistéine, l'apigénine, l'ombelliférone, la l-Tyrosine, le gaïacol, le 2-hydroxy-4-methoxybenzaldéhyde, l'isovanilline, l'acide salicylique, l'acétaminophène, le 4-hydroxybenzaldehyde, l'acide caféique, l'acide 5-aminosalicylique, le 3,4-dihydroxybenzaldéhyde, l'acide 2,5-Dihydroxyterephtalique, la vanilline, l'acide 2,5-dihydroxybenzoique, l'acide gallique, l'acide protocatéchuique, l'acide 4-hydroxyisophtalique, l'acide 2,3,4-trihydroxybenzoique, l'acide 3-O-méthylgallique, l'acide 4,5-dihydroxyphtalique, l'acide 2,4,5-trihydroxybenzoique et leurs mélanges.
11. Une composition de caoutchouc selon la réalisation 1 dans laquelle ledit composé phénolique est choisi parmi l'acétaminophène, le 4-hydroxybenzaldehyde, l'acide caféique, l'acide 5-aminosalicylique, le 3,4-dihydroxybenzaldéhyde, l'acide 2,5-Dihydroxyterephtalique, la vanilline, l'acide 2,5-dihydroxybenzoique, l'acide gallique, l'acide protocatéchuique, l'acide 4-hydroxyisophtalique, l'acide 2,3,4-trihydroxybenzoique, l'acide 3-O-méthylgallique, l'acide 4,5-dihydroxyphtalique, l'acide 2,4,5-trihydroxybenzoique et leurs mélanges.
12. Une composition de caoutchouc selon la réalisation 1 dans laquelle ledit composé phénolique est choisi parmi l'acide caféique, l'acide gallique, l'acide protocatéchuique, l'acide 4-hydroxyisophtalique, l'acide 2,3,4-trihydroxybenzoique, l'acide 3-O-méthylgallique, l'acide 4,5-dihydroxyphtalique l'acide 2,4,5-trihydroxybenzoique et leurs mélanges et préférentiellement choisi parmi l'acide caféique, l'acide gallique et l'acide protocatéchuique.
13. Une composition selon l'une quelconque des réalisations précédentes dans laquelle le taux de composé phénolique est compris entre 0,1 et 25 pce.
14. Une composition selon l'une quelconque des réalisations précédentes dans laquelle le composé de la famille des oses est choisi parmi les trioses, les tétroses, les pentoses, et les hexoses, préférentiellement parmi les pentoses et les hexoses.
15. Une composition selon la réalisation précédente dans laquelle le composé de la famille des oses est choisi parmi le fructose, le psicose, le sorbose, le tagatose, l'allose, l'altrose, le glucose, le mannose, le gulose, l'idose, le galactose et le talose, préférentiellement choisi parmi le fructose, le glucose, le mannose et le galactose, très préférentiellement choisi parmi le fructose et le glucose.
16. Une composition selon l'une quelconque des réalisations précédentes dans laquelle le taux de composé de la famille des oses est compris entre 0,1 et 15 pce, de préférence entre 0,1 et 10 pce.
17. Une composition selon l'une quelconque des réalisations précédentes dans laquelle ladite composition est dépourvue de sels de cobalt ou en contient moins de 1 pce.
18. Une composition de caoutchouc selon l'une quelconque des réalisations précédentes dans laquelle la charge renforçante comporte du noir de carbone, de la silice ou un mélange de noir de carbone et de silice.
19. Une composition de caoutchouc selon l'une quelconque des réalisations précédentes dans laquelle le taux de charge renforçante est comprise entre 20 et 200 pce.
20. Une composition de caoutchouc selon l'une quelconque des réalisations précédentes dans laquelle le ou lesdits composés peroxydes du système de réticulation à base d'un ou plusieurs composés peroxydes représentent de 0,01 à 10 pce.
21. Une composition selon l'une quelconque des réalisations précédentes dans laquelle ladite composition est dépourvue de soufre moléculaire ou en comprend moins de 1 pce.
22. Un composite à base au moins d'un composant présentant une surface métallique et d'une composition selon l'une quelconque des réalisations 1 à 21.
23. Un composite selon la réalisation précédente dans lequel le composant présente une longueur au moins égale au millimètre.
24. Un composite selon l'une quelconque des réalisations 22 à 23 dans lequel le composant est un fil ou un câble.
25. Un composite selon l'une quelconque des réalisations 22 à 24 dans lequel la surface métallique du composant est faite d'un matériau différent du restant du composant.
26. Un composite selon l'une quelconque des réalisations 22 à 25 dans lequel la surface métallique dudit composant comprend un métal choisi dans le groupe constitué par le fer, le cuivre, le zinc, l'étain, l'aluminium, le cobalt, le nickel et les alliages comportant au moins un de ces métaux.
27. Un composite selon l'une quelconque des réalisations 22 à 26 dans lequel le métal de la surface métallique est choisi parmi le fer, le cuivre, l'étain, le zinc ou un alliage comportant au moins un de ces métaux, préférentiellement choisi dans le groupe constitué par le laiton, l'acier, le zinc et le bronze.
28. Un article fini ou semi-fini comprenant une composition selon l'une quelconque des réalisations 1 à 21 ou un composite selon l'une quelconque des réalisations 22 à 27.
29. Un bandage pneumatique comprenant une composition selon l'une quelconque des réalisations 1 à 21 ou un composite selon l'une quelconque des réalisations 22 à 27.
30. Un bandage pneumatique comprenant une couche interne comportant une composition selon l'une quelconque des réalisations 1 à 21 ou un composite selon l'une quelconque des réalisations 22 à 27.

### Définitions

Par l'expression "composition à base de", il faut entendre une composition comportant le mélange et/ou le produit de réaction *in situ* des différents constituants utilisés, certains de ces constituants (de base) pouvant réagir et/ou étant destinés à réagir entre eux, au moins partiellement, lors des différentes phases de fabrication de la composition, modifiant la composition telle qu'elle est préparée au départ. Ainsi les compositions telles que mises en œuvre pour l'invention peuvent être différentes à l'état non réticulé et à l'état réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Elastomère

La composition selon l'invention, comprend au moins un élastomère diénique, de manière préférée un élastomère diénique fortement insaturé.

Par élastomère diénique ou caoutchouc (les deux termes étant de manière connue synonymes et interchangeables), on rappelle que doit être entendu un élastomère qui est issu au moins en partie (i.e. un homopolymère ou un copolymère) de monomères diènes (monomères porteurs de deux doubles liaisons carbone-carbone, conjuguées ou non). Dans la présente demande, les élastomères diéniques sont par définition non thermoplastiques.

Les élastomères diéniques, présentant dans la très grande majorité des cas une Tg négative, c'est-à-dire inférieure à 0°C, peuvent être classés de manière connue en deux catégories : ceux dits "essentiellement insaturés" et ceux dits "essentiellement saturés".

Par élastomère diénique « essentiellement insaturé », on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

A contrario, on entend par élastomère diénique « essentiellement saturé » des élastomères ayant un taux de motifs d'origine diénique faible ou très faible, toujours inférieur à 15% (% en moles), tels que les caoutchoucs butyl, comme par exemple les copolymères de diènes et d'alpha-oléfines type EPDM.

Ces définitions étant données, on entend plus particulièrement par élastomère diénique, quelle que soit la catégorie ci-dessus, susceptible d'être utilisé dans les compositions conformes à l'invention :
(a) tout homopolymère d'un monomère diène, conjugué ou non, ayant de 4 à 18 atomes de carbone ;
(b) tout copolymère d'un diène, conjugué ou non, ayant de 4 à 18 atomes de carbone et d'au moins un autre monomère.

L'autre monomère peut être l'éthylène, une oléfine ou un diène, conjugué ou non. À titre d'exemple d'un tel copolymère, on peut citer l'élastomère éthylène-butadiène, ou ethylene-butadiene rubber (EBR) selon la terminologie anglo-saxonne.

Plus particulièrement, on entend par élastomère diénique susceptible d'être utilisé dans les compositions conformes à l'invention :
(a1) tout homopolymère obtenu par polymérisation d'un monomère diène conjugué ayant de 4 à 12 atomes de carbone;
(b1) tout copolymère obtenu par copolymérisation d'un ou plusieurs diènes conjugués entre eux ou avec un ou plusieurs composés vinyle aromatiques ayant de 8 à 20 atomes de carbone;
(c1) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d1) un copolymère d'isobutène et d'isoprène (caoutchouc diénique butyl), ainsi que les versions halogénées, en particulier chlorées ou bromées, de ce type de copolymère.

Conviennent notamment à titre de diènes conjugués le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. À titre de composés vinyle aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle aromatiques.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

À titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse de -40°C à - 80°C, les copolymères isoprène-styrène et notamment ceux ayant une teneur en styrène comprise entre 5% et 50% en poids et une T_{g} comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et 70°C.

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation.

Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

La T_{g} des polymères décrits ci-dessus est mesurée de manière connue par DSC (Differential Scanning Calorimetry), par exemple et sauf indications différentes spécifiées dans la présente demande, selon la norme ASTM D3418 de 1999.

### Système de réticulation

La réticulation permet généralement d'améliorer les propriétés élastiques de la composition de caoutchouc. Le système de réticulation est destiné à réagir, en particulier avec l'élastomère, pour causer la réticulation de la composition de caoutchouc.

De manière préférée, la composition de caoutchouc selon l'invention est dépourvue de soufre moléculaire, ou en comprend moins de 1 pce, de préférence moins de 0,5 pce et plus préférentiellement moins de 0,2 pce. De manière très préférentielle, la composition ne comprend pas de soufre moléculaire comme agent de réticulation.

Le système de réticulation est à base d'au moins un amorceur de polymérisation radicalaire.

Les amorceurs de polymérisation radicalaire sont une source de radicaux libres nécessaires à la polymérisation de la composition de caoutchouc selon l'invention. Ces amorceurs sont bien connus de l'homme du métier et sont décrits notamment dans les documents WO 2002/22688 A1 et FR 2 899 808 A1 par exemple, ainsi que dans le document Denisov et al. (« Handbook of free radical initiators », John Wiley & Sons, 2003).

De préférence, selon l'invention, l'au moins un amorceur de polymérisation radicalaire est choisi dans le groupe constitué par les peroxydes, les composés azoïques, les systèmes rédox (oxydo-réduction) et leurs mélanges, de préférence dans le groupe constitué par les peroxydes, les composés azoïques, et leurs mélanges. De préférence encore, l'au moins un amorceur de polymérisation radicalaire est un peroxyde ou un mélange de plusieurs peroxydes. Il peut s'agir de tout peroxyde connu de l'homme de l'art, tels que décrits par exemple dans le document WO 2017103387. Parmi les peroxydes, bien connus de l'homme de l'art, il est préférable d'utiliser dans le cadre de la présente invention un peroxyde organique. Le ou lesdits composés peroxydes représentent préférentiellement de 0,01 à 10 pce.

Par « peroxyde organique », on entend un composé organique, c'est-à-dire contenant du carbone, comportant un groupe -O-O- (deux atomes d'oxygène liés par une liaison covalente simple).

Durant le procédé de réticulation, le peroxyde organique se décompose au niveau de sa liaison instable O-O en radicaux libres. Ces radicaux libres permettent la création des liaisons de réticulation.

Selon un mode de réalisation, le peroxyde organique est choisi dans le groupe consistant en les peroxydes de dialkyle, les monoperoxycarbonates, les peroxydes de diacyle, les peroxycétales ou les peroxyesters.

De préférence, les peroxydes de dialkyle sont choisis dans le groupe consistant en le peroxyde de dicumyle, le peroxyde de di-t-butyle, peroxyde de t-butylcumyle , le 2,5-diméthyl-2,5-di(t-butylperoxy)hexane , le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, α,α'-di-[(t-butyl-peroxy)isopropyl] benzène, le α,α'-di-[(t-amyl-peroxy)isopropyl] benzène, le peroxyde de di-t-amyle , le 1,3,5-tri-[(t-butylperoxy)isopropyl]benzène, le 1,3-diméthyl-3-(t-butylperoxy)butanol, et le 1,3-diméthyl-3-(t -amylperoxy) butanol.

Un mélange de peroxyde de dicumyle et de 1,3 et 1,4-isopropylcumyl cumyl peroxyde (commercialisé par exemple par Arkema sous le nom commercial Luperox^{®} DC60) est également intéressant.

Certains monoperoxycarbonates tels que le OO-tert-butyl-O-(2-éthylhexyl) monoperoxycarbonate, OO-tert-butyl-O-isopropyl monoperoxycarbonate et OO-tert-amyl-O-2-éthyl hexyl monoperoxycarbonate, peuvent également être utilisés.

Parmi les peroxydes de diacyles, le peroxyde préféré est le peroxyde de benzoyle.

Parmi les peroxycétales, les peroxydes préférés sont choisis dans le groupe consistant en le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane, et leurs mélanges.

De préférence, les peroxyesters sont choisis dans le groupe consistant en le tert-butylperoxybenzoate, le tert-butyleperoxy-2-ethylhexanoate et le tert-butyleperoxy-3,5,5-triméthylehexanoate.

De manière particulièrement préférée, le peroxyde organique est choisi dans le groupe consistant en le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et les mélanges de ces derniers, encore préférentiellement dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et les mélanges de ces derniers.

Dans un arrangement préféré, la composition de caoutchouc selon l'invention est dépourvue de système de réticulation autre que celui décrit précédemment, à base d'un ou plusieurs composés peroxydes. La composition est préférentiellement dépourvue de tout accélérateur ou activateur de vulcanisation, tels qu'ils sont connus de l'homme du métier, ou en contient moins de 1 pce, de préférence moins de 0,5 pce et plus préférentiellement moins de 0,2 pce.

### Charge renforçante

On peut utiliser tout type de charge renforçante connue pour ses capacités à renforcer une composition de caoutchouc utilisable pour la fabrication de bandages pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les bandages pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titrede silices précipitées hautement dispersibles (dites "HDS"), on citera par exemple les silices « Ultrasil 7000 » et « Ultrasil 7005 » de la société Degussa, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/016837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge organique, particulièrement de noir de carbone, et optionnellement de la silice ; la silice, lorsqu'elle est présente, est utilisée de préférence à un taux inférieur à 20 pce, plus préférentiellement inférieur à 10 pce (par exemple entre 0,1 et 10 pce).

Alternativement, selon un autre mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère, on peut de manière optionnelle utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes, ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet US 2004/132880.

A titre d'agent de couplage autre qu'alkoxysilane polysulfuré, on citera notamment des POS (polyorganosiloxanes) bifonctionnels ou encore des polysulfures d'hydroxysilane tels que décrits dans les demandes de brevet WO 02/30939 et WO 02/31041, ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce. Dans un autre arrangement, les compositions de caoutchouc conformes à l'invention ne comprennent pas d'agent de couplage.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

### Composé phénolique

La composition selon l'invention comprend au moins un composé phénolique de masse molaire au plus égale à 1000 g/mol comprenant un groupe phénolique substitué par au moins un groupe hydrocarboné, ledit groupe hydrocarboné étant interrompu et/ou substitué par un atome d'oxygène et éventuellement par un ou plusieurs hétéroatomes.

Par hétéroatome, on entend un atome au moins monovalent différent de l'atome d'hydrogène et de l'atome de carbone, préférentiellement un atome choisi parmi l'azote et l'oxygène.

De manière préférée, le groupe phénolique du composé phénolique est substitué par au moins deux groupes hydrocarbonés éventuellement interrompus par un ou plusieurs hétéroatomes et/ou substitués, au moins l'un des groupes hydrocarboné étant interrompu et/ou substitué par un atome d'oxygène, les deux groupes hydrocarbonés pouvant former ensemble avec les atomes de carbone du cycle aromatique du groupe phénolique auxquels ils se rattachent, un cycle éventuellement interrompu par un ou plusieurs hétéroatomes et/ou substitué.

De manière préférentielle, le composé phénolique répond à la formule générale (I) 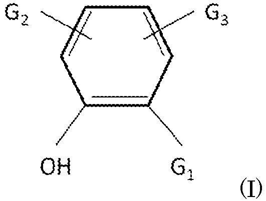 dans laquelle :
- G₁ représente un groupe hydroxyle, carboxyle, alcoxyle ou l'atome d'hydrogène ;
- G₂ représente un groupe hydroxyle, carboxyle ou l'atome d'hydrogène ;
- G₃ représente un groupe hydroxyle, carboxyle, hydrogénocarbonyle, carboxylalkyle, carboxylalkylène, alcoxyle, amino, aminoalkyle, amide, vinyle ou l'atome d'hydrogène ;
au moins un des substituant G₁ à G₃ comprenant un atome d'oxygène, la masse molaire dudit composé phénolique étant au plus égale à 1000 g/mol.

Par groupe carboxyle, ou fonction acide carboxylique, on entend un groupe de formule - COOH dans lequel l'atome de carbone est lié par une double liaison à un atome d'oxygène et par une liaison simple à un groupe hydroxyle -OH.

Par groupe carboxylalkyle, on entend un radical de formule -CₙH₂ₙ-COOH, dans lequel n est un entier, avantageusement allant de 1 à 15, préférentiellement de 1 à 10, très préférentiellement de 1 à 5, et de manière préférée de 1 à 3.

Par groupe alcoxyle, on entend un groupe de formule -OCₙH₂ₙ₊₁ dans lequel n représente un entier allant de 1 à 10, très préférentiellement de 1 à 5, et de manière préférée de 1 à 3.

Par groupe hydrogénocarbonyle, on entend un groupe de formule -CHO dans lequel l'atome de carbone est lié par une double liaison à un atome d'oxygène et par une liaison simple à un atome d'hydrogène.

Par groupe amino, on entend un groupe de formule -NH₂.

Par groupe aminoalkyle, on entend un radical de formule -CₙH₂ₙ-NH₂, dans lequel n est un entier, avantageusement allant de 1 à 15, préférentiellement de 1 à 10, très préférentiellement de 1 à 5, et de manière préférée de 1 à 3.

De manière préférée, le composé phénolique est substitué par au moins deux groupes hydroxyles. De manière préférée, G₁, G₂ et G₃ représentent indépendamment un groupe hydroxyle, carboxyle ou l'atome d'hydrogène et préférentiellement représentent indépendamment un groupe hydroxyle ou carboxyle.

De manière avantageuse, le composé phénolique est substitué par au moins un groupe carboxyle.

De manière avantageuse, le composé phénolique est substitué au moins en position para d'un groupe hydroxyle. Par substitué en position para, on entend comme connu de l'homme du métier que le noyau aromatique dudit composé phénolique est substitué en position 4, ledit groupe hydroxyle étant considéré comme en position 1, les positions 1 à 6 correspondants aux atomes de carbone constituant ledit noyau aromatique. De manière surprenante, la demanderesse a découvert que les propriétés d'adhésion de la composition selon l'invention étaient particulièrement améliorées lorsque que le composé phénolique était substitué au moins en position para d'un groupe hydroxyle. Les propriétés d'adhésion sont particulièrement intéressantes lorsque ledit composé phénolique est substitué en position para d'un groupe hydroxyle par un groupe carboxyle.

Quel que soit le mode de réalisation préféré, la masse molaire du composé phénolique est au plus égale à 1000 g/mol, de manière préférée inférieure à 800 g/mol, préférentiellement inférieure à 600 g/mol, de manière très préférée inférieure à
400 g/mol, très préférentiellement inférieure à 220 g/mol, de manière très préférentielle inférieure à 200 g/mol, voire à 180 g/mol.

Parmi les composés phénoliques utiles aux besoins de l'invention, on peut citer l'acide 1,4-dihydroxy-2-naphtoique, la curcumine, le resveratrol, la daidzéine, la génistéine, l'apigénine, l'ombelliférone, la l-Tyrosine, le gaïacol, le 2-hydroxy-4-methoxybenzaldéhyde, l'isovanilline, l'acide salicylique, l'acétaminophène, le 4-hydroxybenzaldehyde, l'acide caféique, l'acide 5-aminosalicylique, le 3,4-dihydroxybenzaldéhyde, l'acide 2,5-Dihydroxyterephtalique, la vanilline, l'acide 2,5-dihydroxybenzoique, l'acide gallique, l'acide protocatéchuique, l'acide 4-hydroxyisophtalique, l'acide 2,3,4-trihydroxybenzoique, l'acide 3-O-méthylgallique, l'acide 4,5-dihydroxyphtalique, et l'acide 2,4,5-trihydroxybenzoique et leurs mélanges.

Parmi ces composés sont particulièrement préférés l'acétaminophène, le 4-hydroxybenzaldehyde, l'acide caféique, l'acide 5-aminosalicylique, le 3,4-dihydroxybenzaldéhyde, l'acide 2,5-Dihydroxyterephtalique, la vanilline, l'acide 2,5-dihydroxybenzoique, l'acide gallique, l'acide protocatéchuique, l'acide 4-hydroxyisophtalique, l'acide 2,3,4-trihydroxybenzoique, l'acide 3-O-méthylgallique, l'acide 4,5-dihydroxyphtalique, l'acide 2,4,5-trihydroxybenzoique et leurs mélanges. De manière préférentielle, le composé est choisi parmi l'acide caféique, l'acide gallique, l'acide protocatéchuique, l'acide 4-hydroxyisophtalique, l'acide 2,3,4-trihydroxybenzoique, l'acide 3-O-méthylgallique, l'acide 4,5-dihydroxyphtalique l'acide 2,4,5-trihydroxybenzoique et leurs mélanges et préférentiellement choisi parmi l'acide caféique, l'acide gallique et l'acide protocatéchuique.

De manière très préférée, le composé phénolique est l'acide gallique.

La composition de caoutchouc selon l'invention comprend avantageusement de 0,1 à 25 pce de composé phénolique, préférentiellement de 2 à 15 pce. En deçà de 0,1 pce, le composé phénolique n'a pas d'effet notable sur les propriétés d'adhésion de la composition de caoutchouc selon l'invention. Au-delà de 25 pce, on n'observe plus de gain significatif.

### Composé de la famille des oses

La composition de caoutchouc selon l'invention comprend au moins un composé de la famille des oses choisi parmi les aldoses et les cétoses.

Les oses, ou monosaccharides, sont des monomères des glucides. Les aldoses sont des oses dans lesquels la fonction carbonyle est un aldéhyde. Les cétoses sont des oses dans lesquels la fonction carbonyle est une cétone.

Il a été découvert que la combinaison d'un composé phénolique spécifique avec un composé de la famille des oses dans une composition de caoutchouc réticulée avec un système de réticulation à base de peroxyde permettait d'obtenir une excellente adhésion sur des composants métalliques.

De manière préférée, le composé de la famille des oses est choisi parmi les trioses, les tétroses, les pentoses, et les hexoses, préférentiellement parmi les pentoses et les hexoses. De manière préférée, le composé de la famille des oses est choisi parmi le fructose, le psicose, le sorbose, le tagatose, l'allose, l'altrose, le glucose, le mannose, le gulose, l'idose, le galactose et le talose, préférentiellement choisi parmi le fructose, le glucose, le mannose et le galactose, très préférentiellement choisi parmi le fructose et le glucose.

Préférentiellement, le taux de composé de la famille des oses est compris entre 0,1 et 15 pce, de préférence entre 0,1 et 10 pce.

### Additifs divers

Les compositions de caoutchouc conformes à l'invention peuvent comporter également tout ou partie des additifs usuels, connus de l'homme de l'art et habituellement utilisés dans les compositions de caoutchouc pour bandages pneumatiques, en particulier de couches internes telles que définies ultérieurement dans la présente demande, comme par exemple des plastifiants (huiles plastifiantes et/ou résines plastifiantes), des charges renforçantes ou non renforçantes autres que celles précitées, des pigments, des agents de protection tels que cires anti-ozone, anti-ozonants chimiques, anti-oxydants, des agents anti-fatigue, des résines renforçantes (telles que décrites par exemple dans la demande WO 02/10269).

Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (par exemple l'octyltriéthoxysilane, ou silane octéo), des polyols, des polyéthers, des amines primaires, secondaires ou tertiaires, des polyorganosiloxanes hydroxylés ou hydrolysables.

De manière surprenante, une très bonne adhésion de la composition selon l'invention sur des câbles de renforcement est obtenue sans qu'il soit nécessaire d'utiliser de sels de cobalt. Ainsi, la composition selon l'invention est préférentiellement dépourvue de sels de cobalt, tels qu'ils sont connus de l'homme du métier, et dont l'effet connu est une amélioration de l'adhésion, ou en contient moins de 1 pce, de préférence moins de 0,5 pce, plus préférentiellement moins de 0,2 pce et très préférentiellement moins de 0,1 pce.

### Préparation des compositions de caoutchouc

La composition de caoutchouc conforme à l'invention est fabriquée dans des mélangeurs appropriés, en utilisant des phases de préparation bien connues de l'homme du métier :
- une phase de travail ou malaxage thermomécanique, qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, le composé phénolique, les charges, les éventuels autres additifs divers. L'incorporation de la charge à l'élastomère peut être réalisée en une ou plusieurs fois en malaxant thermomécaniquement. Dans le cas où la charge, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges présents dans la composition qui ne sont pas sous la forme de masterbatch, ainsi que les éventuels autres additifs divers. Le malaxage thermomécanique est réalisé à haute température, jusqu'à une température maximale comprise entre 110°C et 200°C, de préférence entre 130°C et 185°C, pendant une durée généralement comprise entre 2 et 10 minutes.
- une seconde phase de travail mécanique peut être ensuite réalisée dans un mélangeur externe tel qu'un mélangeur à cylindres, après refroidissement du mélange obtenu au cours de la première phase jusqu'à une plus basse température, typiquement inférieure à 120°C, par exemple entre 40°C et 100°C.

Le système de réticulation éventuel sera ajouté, conformément aux connaissances de l'homme du métier, lors de la première ou de la seconde phase lorsque celle-ci est réalisée. Un système de réticulation à base de peroxydes sera typiquement ajouté lors de la seconde phase.

La composition finale ainsi obtenue est ensuite calandrée, par exemple sous la forme d'une feuille ou d'une plaque, notamment pour une caractérisation au laboratoire, ou encore extrudée sous la forme d'un semi-fini (ou profilé) de caoutchouc.

La composition peut être soit à l'état cru (avant réticulation), soit à l'état cuit (après réticulation), peut être un produit semi-fini qui peut être utilisé dans un bandage pneumatique.

La cuisson peut être conduite, de manière connue de l'homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du bandage pneumatique.

### Composite

L'invention concerne également un composite à base au moins d'un composant présentant une surface métallique et d'une composition de caoutchouc selon l'invention.

Par l'expression composite "à base au moins d'un composant et d'une composition selon l'invention", il faut entendre un composite comprenant le composant et ladite composition, la composition ayant pu réagir avec la surface du composant lors des différentes phases de fabrication du composite, en particulier au cours de la réticulation de la composition ou au cours de la confection du composite avant réticulation de la composition.

Ledit composant peut être tout ou partie métallique.

La surface métallique du composant constitue au moins une partie, et avantageusement la totalité de la surface dudit composant et est destinée à entrer au contact de la composition selon l'invention.

La composition selon l'invention enrobe au moins une partie du composant, avantageusement la totalité dudit composant.

Le composant est avantageusement en partie ou en intégralité métallique, la partie métallique comprenant au moins la surface métallique. De préférence la totalité du composant est en métal.

Selon une première variante de l'invention, la surface métallique du composant est faite d'un matériau différent du restant du composant. Autrement dit, le composant est fait d'un matériau qui est au moins en partie, avantageusement totalement, recouvert par une couche métallique qui constitue la surface métallique. Le matériau au moins en partie, avantageusement totalement, recouvert par la surface métallique est de nature métallique ou non métallique, de préférence métallique.

Selon une deuxième variante de l'invention, le composant est fait d'un même matériau, auquel cas le composant est fait d'un métal qui est identique au métal de la surface métallique.

Selon un mode de réalisation de l'invention, la surface métallique comprend un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn), le zinc ou le bronze (alliage Cu-Sn), de manière encore plus préférée le laiton ou le zinc, et de manière très préférée le laiton.

Dans la présente demande, l'expression « le métal de la surface métallique est le métal ci-après désigné » revient à dire que la surface métallique est en métal ci-après désigné. Par exemple l'expression « le métal de la surface métallique est le laiton » écrite plus haut signifie que la surface métallique est en laiton. Certains métaux étant sujets à l'oxydation au contact de l'air ambiant, le métal peut être en partie oxydé, à l'exception de l'acier inoxydable.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Le composant peut être sous toute forme. De préférence le composant se présente sous la forme d'un fil ou d'un câble.

Selon un mode de réalisation particulier de l'invention, le composant présente une longueur qui est au moins égale au millimètre. On entend par longueur la plus grande dimension du composant. A titre de composant ayant une longueur qui est au moins égale au millimètre, on peut citer les éléments de renforcement par exemple utilisés dans le bandage pneumatique pour véhicule, comme les éléments filaires (monofilament ou câble) et les éléments non filaires.

Selon un mode de réalisation particulièrement préférentiel de l'invention, le composite est une structure renforcée dans laquelle le composant constitue un élément de renforcement et dans laquelle la composition selon l'invention enrobe l'élément de renforcement.

Selon un mode de réalisation particulièrement préférentiel, le composite est un produit renforcé qui comprend des éléments de renforcement et une gomme de calandrage dans laquelle sont noyés les éléments de renforcement, chaque élément de renforcement consistant en un composant défini précédemment selon l'un quelconque des modes de réalisation de l'invention et la gomme de calandrage comprenant la composition de caoutchouc selon l'invention. Selon ce mode de réalisation, les éléments de renforcement sont agencés généralement côte à côte selon une direction principale. Pour une application envisagée dans le bandage pneumatique, le composite peut donc constituer une armature de renforcement pour bandage pneumatique.

Le composite conforme à l'invention peut être à l'état cru (avant réticulation de la composition de caoutchouc) ou à l'état cuit (après réticulation de la composition de caoutchouc). Le composite est cuit après mise en contact du composant avec la composition de caoutchouc selon l'invention.

Le composite peut être fabriqué par un procédé qui comprend les étapes suivantes :
- Réaliser deux couches de la composition selon l'invention,
- Prendre le composant en sandwich dans les deux couches en le déposant entre les deux couches,
- Le cas échéant cuire le composite.

Alternativement, le composite peut être fabriqué en déposant le composant sur une portion d'une couche, la couche est alors repliée sur elle-même pour couvrir le composant qui est ainsi pris en sandwich sur toute sa longueur ou une partie de sa longueur.

La réalisation des couches peut se faire par calandrage. Au cours de la cuisson du composite, la composition de caoutchouc est réticulée.

Lorsque le composite est destiné à être utilisé en tant qu'armature de renforcement dans un bandage pneumatique, la cuisson du composite a lieu généralement lors de la cuisson de l'enveloppe du bandage pneumatique.

### Article fini ou semi-fini

L'invention a également pour objet un article fini ou semi-fini comprenant la composition ou le composite conforme à l'invention. Par article fini, on entend un article utilisable en tant que tel, par exemple une bande transporteuse. Par article semi-fini, on entend un article destiné à être incorporé dans un produit fini, tel que par exemple une nappe renforcée pour un bandage pneumatique.

### Bandage Pneumatique

Le bandage pneumatique, autre objet de l'invention, a pour caractéristique essentielle de comprendre la composition ou le composite conforme à l'invention. Le bandage pneumatique peut être à l'état cru (avant réticulation de la composition de caoutchouc) ou à l'état cuit (après réticulation de la composition de caoutchouc). Généralement, au cours de la fabrication du bandage pneumatique, la composition ou le composite est déposé à l'état cru (c'est-à-dire avant réticulation de la composition de caoutchouc) dans la structure du bandage pneumatique avant l'étape de cuisson du bandage pneumatique.

L'invention concerne particulièrement des bandages pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

Il est possible de définir au sein du bandage pneumatique trois types de zones :
· La zone radialement extérieure et en contact avec l'air ambiant, cette zone étant essentiellement constituée de la bande de roulement et du flanc externe du bandage pneumatique. Un flanc externe est une couche élastomérique disposée à l'extérieur de l'armature de carcasse par rapport à la cavité interne du bandage pneumatique, entre le sommet et le bourrelet de sorte à couvrir totalement ou partiellement la zone de l'armature de carcasse s'étendant du sommet au bourrelet.
· La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
· La zone interne du bandage pneumatique, c'est-à-dire celle comprise entre les zones extérieure et intérieure. Cette zone inclut des couches ou nappes qui sont appelées ici couches internes du bandage pneumatique. Ce sont par exemple des nappes carcasses, des sous-couches de bande de roulement, des nappes de ceintures de bandage pneumatiques ou tout autre couche qui n'est pas en contact avec l'air ambiant ou le gaz de gonflage du bandage pneumatique.

La composition définie dans la présente description est particulièrement bien adaptée aux couches internes des bandages pneumatiques.

Aussi, l'invention concerne également un bandage pneumatique comprenant une couche interne comportant une composition ou un composite selon la présente invention. Selon l'invention, la couche interne peut être choisie dans le groupe constitué par les nappes carcasse, les nappes sommet, les bourrages-tringle, les pieds sommets, les couches de découplage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

### Exemple

On procède pour préparer les différentes compositions de caoutchouc, de la manière suivante : on introduit dans un mélangeur interne (taux de remplissage final : environ 70% en volume), dont la température initiale de cuve est d'environ 60°C, successivement l'élastomère diénique, puis tous les autres constituants du mélange. On conduit alors un travail thermomécanique en une étape jusqu'à atteindre une température maximale de « tombée » de 150°C. On récupère le mélange ainsi obtenu, on le refroidit sur un mélangeur externe (homo-finisseur) à 30°C, en mélangeant le tout.

Les compositions de caoutchouc préparées sont présentées dans le tableau 1.

**Tableau 1**

| | ***T1*** | **T2** | ***T3*** | ***C1*** | ***C2*** |
|---|---|---|---|---|---|
| *NR (1)* | 100 | 100 | 100 | 100 | 100 |
| *Noir de Carbone (2)* | 60 | 60 | 60 | 60 | 60 |
| *Dicumyl péroxide (3)* | 2 | 2 | 2 | 2 | 2 |
| *Acide Gallique (3)* | 0 | 15 | 0 | 15 | 15 |
| *Glucose (3)* | 0 | 0 | 1,5 | 1,5 | 0 |
| *Fructose (3)* | 0 | 0 | 0 | 0 | 1,5 |

| | | | | | |
|---|---|---|---|---|---|
| Toutes les compositions sont données en pce (1) Caoutchouc Naturel (2) N347 (3) Fournis par Sigma-Aldrich | | | | | |

On note que la composition « T1 » ne comporte ni composé phénolique spécifique, ni composé de la famille des oses. La composition « T2 » ne comprend qu'un composé phénolique spécifique tandis que la composition « T3 » ne comprend qu'un composé de la famille des oses, en l'espèce un aldose à 6 atomes de carbone. La composition « C1 » comprend à la fois un composé phénolique spécifique et un composé de la famille des cétoses et la composition « C2 » comprend à la fois un composé phénolique spécifique et un composé de la famille des aldoses.

La qualité de la liaison entre la composition de caoutchouc et le composant est déterminée par un test basé sur la norme ASTM D2229 dans lequel on mesure la force nécessaire pour extraire des tronçons de fils unitaires présentant une surface métallique de la composition de caoutchouc réticulée. A cette fin, on prépare des composites sous la forme d'éprouvette contenant d'une part des renforts métalliques de type 2.30NF22, qui sont des renforts conventionnellement utilisés dans le domaine des bandages pneumatiques à titre de composant présentant une surface métallique, et d'autre part un mélange élastomère comprenant la composition de caoutchouc réticulée.

### Préparation des éprouvettes

Les compositions de caoutchouc sont utilisées pour confectionner un composite sous la forme d'une éprouvette selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les renforts sont emprisonnés entre les deux plaques à l'état cru, à égale distance et en laissant dépasser de part et d'autre de ces plaques une extrémité du renfort de longueur suffisante pour la traction ultérieure. Le bloc comportant les renforts est alors placé dans un moule adapté aux conditions de tests visées et laissées à l'initiative de l'homme de l'art ; à titre d'exemple, dans le cas présent, la cuisson du bloc est réalisée à 170°C pendant un temps variant de 25 min à 90 min selon la composition sous pression de 5.5 tonnes.

Les renforts sont des câbles 2.30NF22 constitués de deux fils d'acier recouverts de laiton de 30 centièmes de millimètre. L'épaisseur du revêtement en laiton est de 200 nm à 1 µm.

Les éprouvettes ainsi préparées avec des compositions conformes à l'invention correspondent à des composites conformes à l'invention.

### Test d'adhésion

A l'issue de la cuisson, l'éprouvette ainsi constituée du bloc réticulé et des renforts est mise en place dans les mâchoires d'une machine de traction adaptée pour permettre de tester chaque tronçon isolément, à une vitesse et une température donnée (par exemple, dans le cas présent, à 100 mm/min et température ambiante).

On caractérise les niveaux d'adhésion en mesurant la force dite d'arrachement pour arracher les renforts de chaque tronçon de l'éprouvette.

Les résultats sont exprimés en base 100 par rapport à une éprouvette témoin qui contient des renforts de nature identique à l'éprouvette testée et qui contient la composition de caoutchouc « T1 » présentée dans le Tableau 1.

Une valeur supérieure à celle de l'éprouvette témoin, arbitrairement fixée à 100, indique un résultat amélioré, c'est-à-dire une force d'arrachement supérieure à celle de l'éprouvette témoin dont la valeur est arbitrairement fixée à 100.

**Tableau 2**

| Composition | ***T1*** | ***T2*** | ***T3*** | ***C1*** | ***C2*** |
|---|---|---|---|---|---|
| Adhésion | 100 | 145 | 110 | 448 | 214 |

Le tableau 2 montre les résultats des tests d'adhésion effectués sur des éprouvettes témoins et sur des éprouvettes conformes à l'invention.

Par comparaison entre T2 et T1, nous pouvons noter que l'utilisation d'acide gallique seul permet une amélioration de l'adhésion du matériau sur le renfort.

La combinaison d'un composé phénolique spécifique, ici l'acide gallique, avec un composé de la famille des oses, le glucose ou le fructose dans les exemples, permet d'améliorer fortement l'adhésion de la composition de caoutchouc sur le renfort.

## Revendications

1. Composition de caoutchouc à base d'au moins un élastomère diénique, une charge renforçante, un système de réticulation à base d'au moins un ou plusieurs amorceurs de polymérisation radicalaire, au moins un composé phénolique de masse molaire au plus égale à 1000 g/mol comprenant un groupe phénolique substitué par au moins un groupe hydrocarboné, ledit groupe hydrocarboné étant interrompu et/ou substitué par un atome d'oxygène et éventuellement par un ou plusieurs hétéroatomes, ladite composition de caoutchouc comprenant en outre au moins un composé de la famille des oses choisi parmi les aldoses et les cétoses.

2. Composition de caoutchouc selon la revendication précédente dans laquelle le groupe phénolique du composé phénolique est substitué par au moins deux groupes hydrocarbonés éventuellement interrompus par un ou plusieurs hétéroatomes et/ou substitués, au moins l'un des groupes hydrocarboné étant interrompu et/ou substitué par un atome d'oxygène, les deux groupes hydrocarbonés pouvant former ensemble avec les atomes de carbone du cycle aromatique du groupe phénolique auxquels ils se rattachent, un cycle éventuellement interrompu par un ou plusieurs hétéroatomes et/ou substitué.

3. Composition de caoutchouc selon l'une quelconque des revendications précédentes dans laquelle le composé phénolique répond à la formule générale (I) 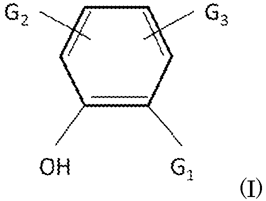 dans laquelle :
- G1 représente un groupe hydroxyle, carboxyle, alcoxyle ou l'atome d'hydrogène ;
- G2 représente un groupe hydroxyle, carboxyle, carbonyle ou l'atome d'hydrogène ;
- G3 représente un groupe hydroxyle, carboxyle, hydrogénocarbonyle, carboxylalkyle, carboxylalkylène, alcoxyle, amino, aminoalkyle, amide, vinyle ou l'atome d'hydrogène ;
au moins un des substituant G1 à G3 comprenant un atome d'oxygène, la masse molaire dudit composé phénolique étant au plus égale à 1000 g/mol, et au moins un composé de la famille des oses choisi parmi les aldoses et les cétoses.

4. Composition de caoutchouc selon l'une quelconque des revendications précédentes dans laquelle ledit composé phénolique est substitué par au moins deux groupes hydroxyles.

5. Composition de caoutchouc selon l'une quelconque des revendications précédentes dans laquelle ledit composé phénolique est substitué par au moins un groupe carboxyle.

6. Composition de caoutchouc selon l'une quelconque des revendications précédentes dans laquelle ledit composé phénolique est substitué au moins en position para d'un groupe hydroxyle, préférentiellement substitué en position para d'un groupe hydroxyle par un groupe carboxyle.

7. Composition de caoutchouc selon l'une quelconque des revendications 3 à 6 dans laquelle G1, G2 et G3 sont choisis indépendamment parmi les groupes hydroxyle, carboxyle et l'atome d'hydrogène, préférentiellement choisis indépendamment parmi les groupes hydroxyle et carboxyle.

8. Composition de caoutchouc selon la revendication 1 dans laquelle ledit composé phénolique est choisi parmi l'acide 1,4-dihydroxy-2-naphtoique, la curcumine, le resveratrol, la daidzéine, la génistéine, l'apigénine, l'ombelliférone, la 1-Tyrosine, le gaïacol, le 2-hydroxy-4-methoxybenzaldéhyde, l'isovanilline, l'acide salicylique, l'acétaminophène, le 4-hydroxybenzaldehyde, l'acide caféique, l'acide 5-aminosalicylique, le 3,4-dihydroxybenzaldéhyde, l'acide 2,5-Dihydroxyterephtalique, la vanilline, l'acide 2,5-dihydroxybenzoique, l'acide gallique, l'acide protocatéchuique, l'acide 4-hydroxyisophtalique, l'acide 2,3,4-trihydroxybenzoique, l'acide 3-O-méthylgallique, l'acide 4,5-dihydroxyphtalique, l'acide 2,4,5-trihydroxybenzoique et leurs mélanges.

9. Composition selon l'une quelconque des revendications précédentes dans laquelle le taux de composé phénolique est compris entre 0,1 et 25 pce.

10. Composition selon l'une quelconque des revendications précédentes dans laquelle le composé de la famille des oses est choisi parmi les trioses, les tétroses, les pentoses, et les hexoses, préférentiellement parmi les pentoses et les hexoses.

11. Composition selon la revendication précédente dans laquelle le composé de la famille des oses est choisi parmi le fructose, le psicose, le sorbose, le tagatose, l'allose, l'altrose, le glucose, le mannose, le gulose, l'idose, le galactose et le talose, préférentiellement choisi parmi le fructose, le glucose, le mannose et le galactose, très préférentiellement choisi parmi le fructose et le glucose.

12. Composition selon l'une quelconque des revendications précédentes dans laquelle le taux de composé de la famille des oses est compris entre 0,1 et 15 pce, de préférence entre 0,1 et 10 pce.

13. Composite à base au moins d'un composant présentant une surface métallique et d'une composition selon l'une des revendications 1 à 12.

14. Article fini ou semi-fini comprenant une composition selon l'une quelconque des revendications 1 à 12 ou un composite selon la revendication 13.

15. Bandage pneumatique comprenant une composition selon l'une quelconque des revendications 1 à 12 ou un composite selon la revendication 13.

## Patentansprüche

1. Kautschukzusammensetzung auf Basis von mindestens einem Dienelastomer, einem verstärkenden Füllstoff, einem Vernetzungssystem auf Basis von mindestens einem oder mehreren radikalischen Polymerisationsinitiatoren und mindestens einer Phenolverbindung mit einer Molmasse von höchstens 1000 g/mol, die eine durch mindestens eine Kohlenwasserstoffgruppe substituierte Phenolgruppe umfasst, wobei die Kohlenwasserstoffgruppe durch ein Sauerstoffatom und gegebenenfalls durch ein oder mehrere Heteroatome unterbrochen und/oder substituiert ist, wobei die Kautschukzusammensetzung außerdem mindestens eine Verbindung aus der Familie der Osen, die aus Aldosen und Ketosen ausgewählt ist, umfasst.

2. Kautschukzusammensetzung nach dem vorhergehenden Anspruch, wobei die Phenolgruppe der Phenolverbindung durch mindestens zwei Kohlenwasserstoffgruppen, die gegebenenfalls durch ein oder mehrere Heteroatome unterbrochen und/oder substituiert sind, substituiert ist, wobei mindestens eine der Kohlenwasserstoffgruppen durch ein Sauerstoffatom unterbrochen und/oder substituiert ist, wobei die zwei Kohlenwasserstoffgruppen zusammen mit den Kohlenstoffatomen des aromatischen Rings der Phenolgruppe, an die sie gebunden sind, einen gegebenenfalls durch ein oder mehrere Heteroatome unterbrochenen und/oder substituierten Ring bilden können.

3. Kautschukzusammensetzung nach einem der vorhergehenden Ansprüche, wobei die Phenolverbindung der allgemeinen Formel (I) entspricht 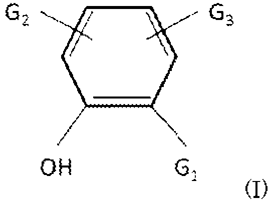 in der:
- G1 für eine Hydroxyl-, Carboxyl- oder Alkoxygruppe oder ein Wasserstoffatom steht;
- G2 für eine Hydroxyl-, Carboxyl- oder Carbonylgruppe oder ein Wasserstoffatom steht;
- G3 für eine Hydroxyl-, Carboxyl-, Hydrogencarbonyl-, Carboxylalkyl-, Carboxylalkylen-, Alkoxy-, Amino-, Aminoalkyl-, Amid- oder Vinylgruppe oder ein Wasserstoffatom steht;
wobei mindestens einer der Substituenten G1 bis G3 ein Sauerstoffatom umfasst, wobei die Molmasse der Phenolverbindung höchstens 1000 g/mol beträgt, und mindestens eine Verbindung aus der Familie der Osen, die aus Aldosen und Ketosen ausgewählt ist.

4. Kautschukzusammensetzung nach einem der vorhergehenden Ansprüche, wobei die Phenolverbindung durch mindestens zwei Hydroxylgruppen substituiert ist.

5. Kautschukzusammensetzung nach einem der vorhergehenden Ansprüche, wobei die Phenolverbindung durch mindestens eine Carboxylgruppe substituiert ist.

6. Kautschukzusammensetzung nach einem der vorhergehenden Ansprüche, wobei die Phenolverbindung zumindest in der para-Position zu einer Hydroxylgruppe substituiert ist, vorzugsweise in der para-Position zu einer Hydroxylgruppe durch eine Carboxylgruppe substituiert ist.

7. Kautschukzusammensetzung nach einem der Ansprüche 3 bis 6, wobei G1, G2 und G3 unabhängig aus Hydroxyl- und Carboxylgruppen und einem Wasserstoffatom ausgewählt sind, vorzugsweise unabhängig aus Hydroxyl- und Carboxylgruppen ausgewählt sind.

8. Kautschukzusammensetzung nach Anspruch 1, wobei die Phenolverbindung aus 1,4-Dihydroxy-2-naphtoesäure, Curcumin, Resveratrol, Daidzein, Genistein, Apigenin, Umbelliferon, 1-Tyrosin, Guajacol, 2-Hydroxy-4-methoxybenzaldehyd, Isovanillin, Salicylsäure, Acetaminophen, 4-Hydroxybenzaldehyd, Caffeinsäure, 5-Aminosalicylsäure, 3,4-Dihydroxybenzaldehyd, 2,5-Dihydroxyterephtalsäure, Vanillin, 2,5-Dihydroxybenzoesäure, Gallussäure, Protocatechusäure, 4-Hydroxyisophtalsäure, 2,3,4-Trihydroxybenzoesäure, 3-O-Methylgallussäure, 4,5-Dihydroxyphtalsäure, 2,4,5-Trihydroxybenzoesäure und Mischungen davon ausgewählt ist.

9. Zusammensetzung nach einem der vorhergehenden Ansprüche, wobei der Gehalt an Phenolverbindung zwischen 0,1 und 25 phe liegt.

10. Zusammensetzung nach einem der vorhergehenden Ansprüche, wobei die Verbindung aus der Familie der Osen aus Triosen, Tetrosen, Pentosen und Hexosen, vorzugsweise aus Pentosen und Hexosen, ausgewählt ist.

11. Zusammensetzung nach dem vorhergehenden Anspruch, wobei die Verbindung aus der Familie der Osen aus Fructose, Psicose, Sorbose, Tagatose, Allose, Altrose, Glucose, Mannose, Gulose, Idose, Galactose und Talose ausgewählt ist, vorzugsweise aus Fructose, Glucose, Mannose und Galactose ausgewählt ist, sehr bevorzugt aus Fructose und Glucose ausgewählt ist.

12. Zusammensetzung nach einem der vorhergehenden Ansprüche, wobei der Gehalt an Verbindung aus der Familie der Osen zwischen 0,1 und 15 phe, bevorzugt zwischen 0,1 und 10 phe, liegt.

13. Verbund auf Basis von mindestens einer Komponente mit einer Metalloberfläche und einer Zusammensetzung nach einem der Ansprüche 1 bis 12.

14. Erzeugnis oder Halbzeug, umfassend eine Zusammensetzung nach einem der Ansprüche 1 bis 12 oder einen Verbund nach Anspruch 13.

15. Luftreifen, umfassend eine Zusammensetzung nach einem der Ansprüche 1 bis 12 oder einen Verbund nach Anspruch 13.

## Claims

1. Rubber composition based on at least one diene elastomer, a reinforcing filler, a crosslinking system based on at least one or more radical polymerization initiators, at least one phenolic compound with a molar mass at most equal to 1000 g/mol comprising a phenolic group substituted with at least one hydrocarbon group, said hydrocarbon group being interrupted by and/or substituted with an oxygen atom and optionally interrupted by and/or substituted with one or more heteroatoms, said rubber composition further comprising at least one compound of the monosaccharide family selected from aldoses and ketoses.

2. Rubber composition according to the preceding claim, in which the phenolic group of the phenolic compound is substituted with at least two hydrocarbon groups optionally interrupted by one or more heteroatoms and/or substituted, at least one of the hydrocarbon groups being interrupted by and/or substituted with an oxygen atom, the two hydrocarbon groups being able to form, together with the carbon atoms of the aromatic ring of the phenolic group to which they are attached, a ring optionally interrupted by one or more heteroatoms and/or substituted.

3. Rubber composition according to either one of the preceding claims, in which the phenolic compound corresponds to general formula (I) 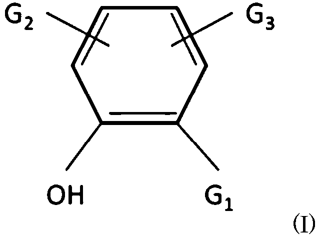 in which:
- G₁ represents a hydroxyl, carboxyl or alkoxy group or a hydrogen atom;
- G₂ represents a hydroxyl, carboxyl or carbonyl group or a hydrogen atom;
- G₃ represents a hydroxyl, carboxyl, hydrogenocarbonyl, carboxyalkyl, carboxyalkylene, alkoxy, amino, aminoalkyl, amide or vinyl group or a hydrogen atom;
at least one of the substituents G₁ to G₃ comprising an oxygen atom, the molar mass of said phenolic compound being at most equal to 1000 g/mol, and at least one compound of the monosaccharide family selected from aldoses and ketoses.

4. Rubber composition according to any one of the preceding claims, in which said phenolic compound is substituted with at least two hydroxyl groups.

5. Rubber composition according to any one of the preceding claims, in which said phenolic compound is substituted with at least one carboxyl group.

6. Rubber composition according to any one of the preceding claims, in which said phenolic compound is substituted at least in the position para to a hydroxyl group, preferentially substituted, in the position para to a hydroxyl group, with a carboxyl group.

7. Rubber composition according to any one of Claims 3 to 6, in which G₁, G₂ and G₃ are independently selected from hydroxyl and carboxyl groups and a hydrogen atom, preferentially independently selected from hydroxyl and carboxyl groups.

8. Rubber composition according to Claim 1, in which said phenolic compound is selected from 1,4-dihydroxy-2-naphthoic acid, curcumin, resveratrol, daidzein, genistein, apigenin, umbelliferone, l-tyrosine, guaiacol, 2-hydroxy-4-methoxybenzaldehyde, isovanillin, salicylic acid, acetaminophen, 4-hydroxybenzaldehyde, caffeic acid, 5-aminosalicylic acid, 3,4 -dihydroxybenzaldehyde, 2,5-dihydroxyterephthalic acid, vanillin, 2,5-dihydroxybenzoic acid, gallic acid, protocatechuic acid, 4-hydroxyisophthalic acid, 2,3,4- trihydroxybenzoic acid, 3-O-methylgallic acid, 4,5-dihydroxyphthalic acid, 2,4,5-trihydroxybenzoic acid and mixtures thereof.

9. Composition according to any one of the preceding claims, in which the content of phenolic compound is between 0.1 and 25 phr.

10. Composition according to any one of the preceding claims, in which the compound of the monosaccharide family is selected from trioses, tetroses, pentoses and hexoses, preferentially from pentoses and hexoses.

11. Composition according to the preceding claim, in which the compound of the monosaccharide family is selected from fructose, psicose, sorbose, tagatose, allose, altrose, glucose, mannose, gulose, idose, galactose and talose, preferentially selected from fructose, glucose, mannose and galactose, very preferentially selected from fructose and glucose.

12. Composition according to any one of the preceding claims, in which the content of compound of the monosaccharide family is between 0.1 and 15 phr, preferably between 0.1 and 10 phr.

13. Composite based at least on a component having a metallic surface and on a composition according to one of Claims 1 to 12.

14. Finished or semi-finished article comprising a composition according to any one of Claims 1 to 12 or a composite according to Claim 13.

15. Pneumatic tyre comprising a composition according to any one of Claims 1 to 12 or a composite according to Claim 13.
